# EUROPÄISCHE PATENTSCHRIFT

(11) **EP 1 903 536 B1**
(45) Veröffentlichungstag und Bekanntmachung des Hinweises auf die Patenterteilung: **01.07.2009**
(21) Anmeldenummer: 07114089.1
(22) Anmeldetag: 09.08.2007
(51) Int. Cl.: G08G 1/16

(54) **Fahrerassistenzsystem mit Abstandsregel- und Kollisionswarnfunktion**
Driver assistance system with distance control and collision warning function
Système d'assistance du conducteur doté d'une fonction de réglage de distance et d'alerte de collision

(30) Priorität: 25.09.2006 DE 102006045167
(43) Veröffentlichungstag der Anmeldung: 26.03.2008
(73) Patentinhaber: ROBERT BOSCH GMBH, 70442 Stuttgart (DE)
(72) Erfinder: Schwindt, Oliver, 71277 Rutesheim (DE); Kaminski, Jacek, 70597 Stuttgart-Degerloch (DE); Zeppelin, Frank, 70195 Stuttgart (DE)

(56) Entgegenhaltungen:
- EP-A- 1 349 131
- DE-A1- 10 339 647
- DE-A1-3102005 014 80
- US-A1- 2004 090 319

## Beschreibung

Die Erfindung betrifft ein Fahrerassistenzsystem für Kraftfahrzeuge, mit einem Ortungssensor und einer Kollisionswarnfunktion zur Ausgabe eines Warnhinweises, wenn ein anhand der Daten des Ortungssensors bestimmter Gefahrenparameter einen Schwellenwert überschreitet.

Aus der EP 1 349 131 A ist ein Fahrerassistenzsystem dieser Art bekannt, bei dem der Schwellenwert von einem durch den Fahrer wählbaren Parameter abhängig ist, der unter anderem eine Zeitlücke bestimmt, die einem Sollabstand zu einem vorausfahrenden Fahrzeug entspricht.

Außerdem sind Fahrerassistenzsysteme mit einer Abstandsregelfunktion bekannt. Solche Fahrerassistenzsysteme werden auch als ACC-Systeme (Adaptive Cruise Control) bezeichnet und dienen dazu, die Geschwindigkeit des Fahrzeugs so zu regeln, daß ein in der eigenen Spur unmittelbar vorausfahrendes Fahrzeug in einem angemessenen Sicherheitsabstand verfolgt wird. Der Sicherheitsabstand ist geschwindigkeitsabhängig und ist über die sogenannte Zeitlücke definiert, d.h., den zeitlichen Abstand, in dem das eigene Fahrzeug auf das vorausfahrende Fahrzeug folgt. Die Soll-Zeitlücke ist typischerweise innerhalb gewisser Grenzen vom Fahrer wählbar, beispielsweise im Bereich von 1,3 bis 2,2 s. Bei dem Ortungssensor handelt es sich zumeist um einen winkelauflösenden Radarsensor, der vorn im Fahrzeug eingebaut ist und es erlaubt, die Abstände, Relativgeschwindigkeiten und Azimutwinkel vorausfahrender Fahrzeuge zu messen. Anhand des Abstands und des Azimutwinkels läßt sich die Querablage der Fahrzeuge berechnen, so daß entschieden werden kann, ob sich ein Fahrzeug in der eigenen Spur oder einer Nebenspur befindet. Bei gekrümmtem Fahrbahnverlauf wird dabei die Fahrbahnkrümmung in Rechnung gestellt, die beispielsweise anhand der Giergeschwindigkeit des eigenen Fahrzeugs abgeschätzt werden kann. Wenn sich kein vorausfahrendes Fahrzeug in der eigenen Spur befindet, wird auf eine vom Fahrer gewählte Wunschgeschwindigkeit geregelt. Ist dagegen mindestens ein Fahrzeug in der eigenen Spur vorhanden, so wird das unmittelbar vorausfahrende Fahrzeug, also das mit dem kleinsten Abstand, als Zielobjekt für die Abstandsregelung ausgewählt. Anhand der Abstände und Relativgeschwindigkeiten dieses Fahrzeugs erfolgt dann ein Eingriff in das Antriebs- und/oder Bremssystem des Fahrzeugs.

Fahrerassistenzsysteme mit einer Kollisionswarnfunktion werden auch als PSS-Systeme (Predictive Safety System) bezeichnet und haben den Zweck, den Fahrer beispielsweise durch ein akustisches Signal auf eine bevorstehende Kollisionsgefahr hinzuweisen. Auch bei einem solchen System werden die Daten eines Ortungssensors, beispielsweise eines Radarsensors ausgewertet. PSS-Systeme werden deshalb zumeist in Kombination mit ACC-Systemen angeboten, so daß für beide Funktionen derselbe Radarsensor genutzt werden kann. Zur Bewertung der Kollisionsgefahr wird ein Gefahrenparameter berechnet. Dabei kann es sich beispielsweise um die sogenannte "time to collision" (ttc) handeln,. d.h., die Zeit bis zum Aufprall, die unter der Annahme vorausberechnet wird, daß die beteiligten Fahrzeuge ihren derzeitigen Geschwindigkeits- oder Beschleunigungszustand beibehalten. Wenn die ttc unter einen bestimmten Schwellenwert sinkt (den Schwellenwert also in Richtung kleinerer Werte überschreitet), wird ein Warnhinweis ausgelöst. Alternativ kann als Gefahrenparameter auch die (negative) Beschleunigung a_{c} herangezogen werden, die zur Vermeidung der Kollision erforderlich wäre. Ebenso kann als Gefahrenparameter auch eine algebraische oder logische Funktion der beiden oben genannten Parameter benutzt werden.

Die Wahl des Schwellenwertes für die Auslösung des Warnhinweises erfordert stets einen Kompromiß. Einerseits sollte die Auslöseschwelle möglichst niedrig sein, damit möglichst frühzeitig eine Warnung ausgelöst wird und dem Fahrer genügend Zeit für eine Reaktion und für die Abwendung der Kollision verbleibt. Andererseits steigt jedoch mit niedrigerer Auslöseschwelle die Häufigkeit von Fehlwarnungen, die der Fahrer als irritierend oder zumindest als lästig empfinden kann und die bei zu großer Häufigkeit dazu führen können, daß der Fahrer das System ganz abschaltet. Besonders problematisch sind in diesem Zusammenhang PSS-Systeme, die nicht nur auf bewegte Objekte, also beispielsweise auf andere fahrende Fahrzeuge reagieren, sondern auch auf stehende Objekte. Da stehende Objekte am Fahrbahnrand relativ häufig sind, und da aufgrund von Unsicherheiten bei der Prädiktion des Kursverlaufes nicht immer sicher entschieden werden kann, ob das Objekt wirklich ein relevantes Hindernis darstellt oder sich am Fahrbahnrand oder zumindest abseits des voraussichtlichen Fahrschlauches des eigenen Fahrzeugs befindet, ist die Gefahr von Fehlwarnungen hier besonders groß. Beispielsweise kann es bei einem zu frühen Warnzeitpunkt häufig zu Fehlwarnungen kommen, wenn bei geänderter Spurführung oder bei Fahrbahnverengungen an Baustellen Leitbaken oder dergleichen geortet und fälschlich als Hindernisse interpretiert werden, obgleich diese Warnbaken ohne weiteres umfahren werden können. In der Praxis wird deshalb bisher bei stehenden Objekten eine hohe Auslöseschwelle und ein entsprechend später Warnzeitpunkt gewählt. Dies schränkt jedoch den Nutzen des Systems erheblich ein, da dann auch bei echten Gefahrensituationen nur eine entsprechend kurze Vorwarnzeit verbleibt.

### Offenbarung der Erfindung

Aufgabe der Erfindung ist es, ein Fahrerassistenzsystem der eingangs genannten Art zu schaffen, das einen frühen Warnzeitpunkt ermöglicht und dennoch eine hohe Akzeptanz aufweist.

Diese Aufgabe wird erfindungsgemäß dadurch gelöst, daß das Fahrerassistenzsystem weiterhin eine Abstandsregelfunktion aufweist, die dazu ausgebildet ist, den Abstand zu einem vorausfahrenden Fahrzeug durch Eingriff in das Antriebssystem und das Bremssystem des eigenen Fahrzeugs auf eine vom Fahrer innerhalb gewisser Grenzen frei wählbare Zeitlücke zu regeln, und daß der Schwellenwert in Abhängigkeit von dieser Zeitlücke variabel ist.

Die Erfindung beruht auf der Überlegung, daß die vom Fahrer vorgenommene Wahl der Zeitlücke für die Abstandsregelfunktion Anhaltspunkte für Präferenzen des jeweiligen Fahrers gibt, die für eine Optimierung der PSS Funktion genutzt werden können. Ein Fahrer, der eine komfortbetonte Fahrweise bevorzugt und auf große Sicherheitsabstände Wert legt, wird im allgemeinen eine relativ große Zeitlücke wählen. Bei einem solchen Fahrer kann unterstellt werden, daß er auch bei einer sich anbahnenden Kollisionsgefahr eher zu einer frühzeitigen und vorbeugenden Reaktion neigt, so daß es auch bei einer relativ niedrig angesetzten Auslöseschwelle für die Kollisionswarnfunktion nur selten zu Fehlwarnungen kommen wird. Es kann auch unterstellt werden, daß ein Fahrer mit diesen Präferenzen eine frühzeitige Warnung wünscht, da er bestrebt ist, kritische Situationen schon im Ansatz zu vermeiden und/oder vielleicht auch sein eigenes Reaktionsvermögen als eher gering einschätzt. Den Bedürfnissen und Wünschen dieses Fahrers kommt daher eine niedrige Auslöseschwelle des PSS Systems entgegen. Umgekehrt wird ein Fahrer, der eine eher sportliche oder dynamische Fahrweise bevorzugt und sich zutraut, in kritischen Situationen schnell reagieren zu können, eher eine niedrige Zeitlücke wählen. Ein solcher Fahrer würde sich durch häufige, aus seiner Sicht unnötige Warnungen gestört fühlen, so daß für diesen Fahrer eine höhere Auslöseschwelle des PSS-Systems angemessen ist.

Auf diese Weise ermöglicht es die Erfindung, die Funktionsweise des PSS Systems automatisch an die Präferenzen und Bedürfnisse des jeweiligen Fahrers anzupassen.

Vorteilhafte Weiterbildungen und Ausgestaltungen der Erfindung ergeben sich aus den Unteransprüchen.

Die Erfindung ist bei PSS-Systemen, die nur auf bewegte Objekte reagieren, ebenso anwendbar wie bei PSS-Systemen, die auch auf stehende Objekte reagieren. Im letzteren Fall können für stehende Objekte und bewegte Objekte unterschiedliche Auslöseschwellen vorgesehen sein, von denen mindestens eine, vorzugsweise die für stehende Objekte, in Abhängigkeit von der Zeitlücke variabel ist. Wenn beide Schwellenwerte in Abhängigkeit von der Zeitlücke variieren, kann die Abhängigkeit des Schwellenwertes von der Zeitlücke für stehende und bewegte Objekte unterschiedlich sein.

Zwischen der Zeitlücke und dem Schwellenwert kann ein linearer oder wahlweise auch ein nichtlinearer Zusammenhang bestehen. Da sich die Zeitlücke in der Regel ohnehin nur innerhalb bestimmter Grenzen wählen läßt, läßt sich der Zusammenhang so gestalten, daß auch der Schwellenwert für den Warnhinweis nur innerhalb vernünftiger Grenzen variiert.

Obgleich im Rahmen der Erfindung die PSS-Funktion auf einen Parameter für die ACC-Funktion, nämlich die Zeitlücke, zugreift, muß die ACC-Funktion nicht zwingend aktiv sein, wenn die PSS-Funktion aktiviert ist. Bei inaktiver ACC-Funktion kann der Schwellenwert anhand der Zeitlücke bestimmt werden, die der Fahrer bei aktivem ACC-System eingestellt hatte. Bei manchen bekannten ACC-Systemen wird die Zeitlücke bei der Aktivierung auf einen Standardwert zurückgesetzt. In diesem Fall kann für die Bestimmung des Schwellenwertes die Zeitlücke herangezogen werden, die der Fahrer zuletzt von Hand eingestellt hatte oder die er bei Fahrten mit aktivem ACC-System am häufigsten wählt.

Bei dem Gefahrenparameter, der mit dem Schwellenwert zu vergleichen ist, kann es sich wahlweise um die ttc oder auch um die zur Kollisionsabwendung notwendige Beschleunigung a_{c} handeln. Diese letztere Beschleunigung wird im allgemeinen nicht identisch mit der Sollbeschleunigung sein, die von der ACC-Funktion im Rahmen der Abstandsregelung berechnet wird, da die Abstandsregelung nicht unmittelbar auf die Vermeidung einer Kollision, sondern vielmehr auf die Einhaltung der Zeitlücke abzielt. Bei bekannten ACC-Systemen wird, auch wenn sie keine besondere PSS-Funktion aufweisen, ein Warnhinweis an den Fahrer ausgegeben, wenn der Betrag der Beschleunigung, die zur Einhaltung der Zeitlücke notwendig wäre, einen bestimmten Grenzwert überschreitet. Dieser Grenzwert ist jedoch bei beiden bekannten Systemen nicht seinerseits von der Zeitlücke abhängig.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
Fig. 1 ein Blockdiagramm eines erfindungsgemäßen Fahrerassistenzsystems;
Fig. 2eine Skizze zur Erläuterung einer Kollisionswarnfunktion;
Fig. 3ein Diagramm zur Illustration von Bedingungen für die Auslösung der Kollisionswarnung; und
Fig. 4ein Diagramm zur Illustration einer Abhängigkeit einer Auslöseschwelle der Kollisionswarnfunktion von einer Zeitlücke einer Abstandsregelfunktion.

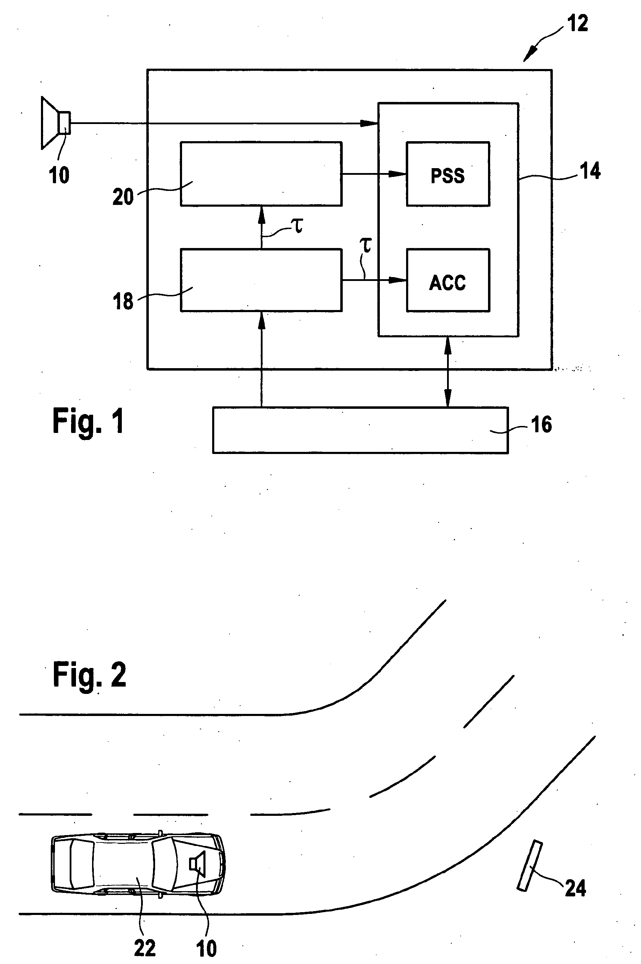

Das in Fig. 1 gezeigte Fahrerassistenzsystem umfaßt einen winkelauflösenden Ortungssensor 10, beispielsweise einen vorn im Fahrzeug eingebauten Radarsensor, und ein elektronisches Datenverarbeitungssystem 12, das die vom Ortungssensor 10 gelieferten Daten auswertet und auf dieser Grundlage zwei oder mehrere Assistenzfunktionen 14 ausführt. Die Assistenzfunktionen 14 umfassen eine Abstandsregelfunktion ACC sowie eine Kollisionswarnfunktion PSS.

Eine Benutzerschnittstelle 16 ermöglicht dem Fahrer die Bedienung des Fahrerassistenzsystems, einschließlich der Wahl von Parametern für die verschiedenen Assistenzfunktionen, und umfaßt außerdem akustische und visuelle Ausgabeeinrichtungen, über die Warnsignale oder ggf. auch gesprochene Warnmeldungen sowie schriftliche oder symbolische Meldungen, die im Datenverarbeitungssystem 12 generiert werden, an den Fahrer ausgegeben werden können. Unter anderem erlaubt die Benutzerschnittstelle 16 die Steuerung eines Warnmoduls 18, mit dem eine Zeitlücke τ bestimmt wird, die bei der Abstandsregelung zugrunde zu legen ist.

Die Kollisionswarnfunktion PSS löst einen Kollisionswarnhinweis aus, wenn ein anhand der Daten des Ortungssensors 10 bestimmter Gefahrenparameter einen bestimmten Schwellenwert überschreitet. Zur Bestimmung dieses Schwellenwertes oder ggf. auch mehrerer Schwellenwerte für mehrere Gefahrenparameter oder für unterschiedliche Objekttypen, z.B. stehende Objekte und bewegliche Objekte, ist ein besonderes Schwellenwertmodul 20 vorgesehen. Dieses Schwellenwertmodul 20 wird vom Warnmodul 18 über die gewählte Zeitlücke τ informiert und berechnet den Schwellenwert in Abhängigkeit von der Zeitlücke τ, wie später noch näher erläutert werden soll.

Figur 2 zeigt eine typische Verkehrssituation, anhand derer die Problematik bei der Bestimmung des Schwellenwertes für die Kollisionswarnfunktion illustriert werden soll, insbesondere die Problematik bei einer Kollisionswarnung auf stehende Objekte. In dem in Figur 2 gezeigten Beispiel befindet sich ein mit dem Fahrerassistenzsystem nach Figur 1 ausgerüstetes Fahrzeug 22 unmittelbar vor der Einfahrt in eine relativ enge Kurve. Am kurvenaußenseitigen Fahrbahnrand steht eine übliche Kurventafel 24, die die Verkehrsteilnehmer auf eine gefährliche Kurve hinweisen soll. Die Kurventafel 24 befindet sich im Ortungsbereich des Ortungssensors 10 und wird somit als stehendes Objekt geortet. Da das Fahrzeug 22 noch nicht in die Kurve eingefahren ist, läßt sich anhand der Giergeschwindigkeit oder des Lenkeinschlags dieses Fahrzeugs noch nicht der gekrümmte Fahrbahnverlauf erkennen. Aus der Sicht des PSS Systems stellt somit die Kurventafel 24 ein potentielles Hindernis dar, vor dem gewarnt werden muß, wenn die vorausberechnete Zeit ttc bis zum Aufprall einen im Schwellenwertmodul 20 berechneten Schwellenwert unterschreitet oder wenn der Betrag der (negativen) Beschleunigung, mit der das Fahrzeug 22 verzögert werden müßte, damit es noch vor der Kurventafel 24 zum Stehen kommt, einen entsprechenden Schwellenwert überschreitet. Wenn beispielsweise der Schwellenwert für den Betrag der Beschleunigung zu niedrig gewählt ist, kommt es daher zu einer Kollisionswarnung, die aus der Sicht des Fahrers unnötig und störend ist.

Dieses Problem kann jedoch dadurch gemildert werden, daß das Schwellenwertmodul 20 den Schwellenwert in Abhängigkeit von der vom Fahrer gewählten Zeitlücke τ variiert. Wenn der Fahrer eine komfort- und sicherheitsbetonte Fahrweise bevorzugt, wird er eine große Zeitlücke τ wählen, entsprechend einem großen Sicherheitsabstand zu etwa vorausfahrenden Fahrzeugen. Dieser Fahrer wird frühzeitige Warnhinweise für wünschenswert halten und wird deshalb auch eher bereit sein, eine mögliche Fehlwarnung zu akzeptieren. Außerdem kann unterstellt werden, daß dieser Fahrer bei seiner komfortbetonten Fahrweise, sofern er die bevorstehende Kurve erkannt hat, von sich aus frühzeitig das Fahrzeug verzögern wird, so daß die zur Abwendung der Kollision notwendige Beschleunigung a_{c} dem Betrage nach kleiner bleibt und den Schwellenwert nicht überschreitet, so daß die Kollisionswarnung unterbleibt. Entsprechend wird auch die Zeit ttc bis zur Kollision größer bleiben und möglicherweise nicht unter den zugehörigen Schwellenwert abnehmen.

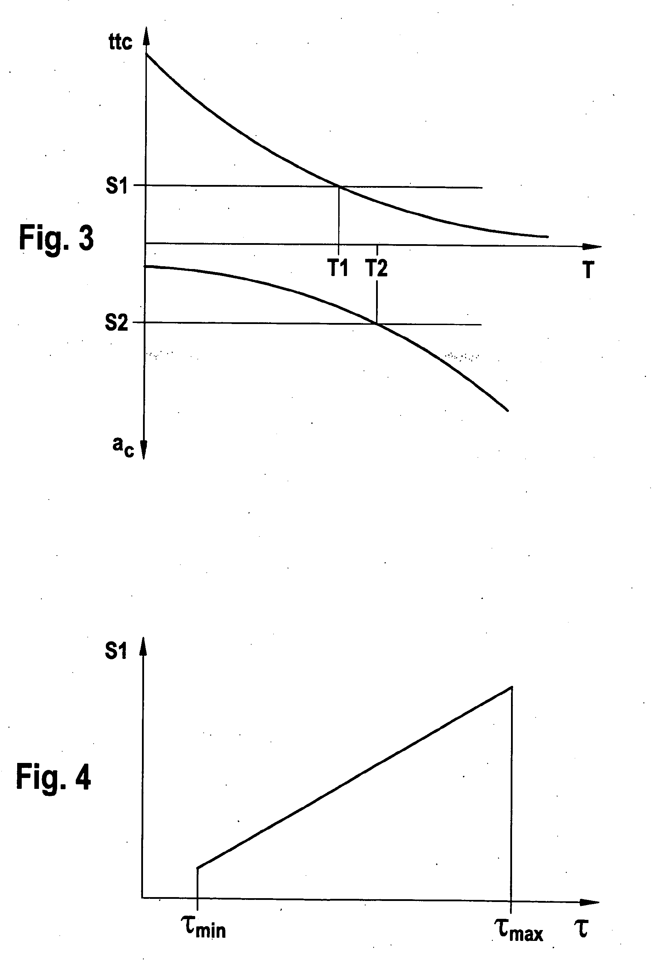

In Figur 3 sind der zeitliche Verlauf der "time to collision" ttc und der zur Kollisionsvermeidung notwendigen Beschleunigung a_{c} für den in Figur 2 gezeigten Annäherungsprozeß an das potentielle Hindernis in Diagrammform dargestellt. Die "time to collision" ttc nimmt im Laufe der Zeit ab und unterschreitet zu einem Zeitpunkt T1 einen Schwellenwert S1, der für diesen Parameter im Schwellenwertmodul 20 eingestellt ist. Die (negative) Beschleunigung a_{c} nimmt dagegen im Laufe der Zeit ab, also dem Betrage nach zu, und überschreitet zu einem Zeitpunkt T2 einen zugehörigen Schwellenwert S2. Je nach Ausführungsform können nun das Schwellenwertmodul 20 und die PSS Funktion so ausgelegt sein, daß eine Kollisionswarnung ausgegeben wird, wenn mindestens einer der Schwellenwerte S1, S2 überschritten wird (zum Zeitpunkt T1), oder eine Kollisionswarnung erst ausgegeben wird, wenn beide Schwellenwerte S1 und S2 überschritten werden (zum Zeitpunkt T2). Ebenso ist es auch möglich, aus den beiden Parametern ttc und a_{c} eine gewichtete Summe zu bilden und diese mit einem einzigen Schwellenwert zu vergleichen.

In jedem Fall ist der Schwellenwert oder sind die Schwellenwerte S1, S2 von der vom Fahrer gewählten Zeitlücke τ abhängig. Dies ist in Figur 4 für den Schwellenwert S1 illustriert. Die Zeitlücke τ kann vom Fahrer zwischen einem Minimalwert τₘᵢₙ und einem Maximalwert τₘₐₓ eingestellt werden. Im gezeigten Beispiel ist der Schwellenwert S1 eine lineare, steigende Funktion der Zeitlücke τ, so daß der Schwellenwert S1 um so größer wird, je größer der Fahrer die Zeitlücke τ gewählt hat. Das bedeutet, daß bei größerer Zeitlücke der Zeitpunkt T1 in Figur 3 zu früheren Werten verschoben ist. Analog ist der Schwellenwert S2 so von der Zeitlücke τ abhängig, daß bei größerer Zeitlücke auch der Zeitpunkt T2 in Figur 3 zu früheren Werten verschoben wird.

## Patentansprüche

1. Fahrerassistenzsystem für Kraftfahrzeuge (22), mit einem Ortungssensor (10) und einer Kollisionswarnfunktion (PSS) zur Ausgabe eines Warnhinweises, wenn ein anhand der Daten des Ortungssensors (10) bestimmter Gefahrenparameter (ttc, ac) einen Schwellenwert (S1, S2) überschreiten, **dadurch gekennzeichnet, daß** das Fahrerassistenzsystem weiterhin eine Abstandsregelfunktion (ACC) aufweist, die dazu ausgebildet ist, den Abstand zu einem vorausfahrenden Fahrzeug durch Eingriff in das Antriebssystem und das Bremssystem des eigenen Fahrzeugs auf eine vom Fahrer innerhalb gewisser Grenzen frei wählbare Zeitlücke (t) zu regeln, und daß der Schwellenwert (S1, S2) in Abhängigkeit von dieser Zeitlücke (t) variabel ist

2. Fahrerassistenzsystem nach Anspruch 1, **dadurch gekennzeichnet, daß** der Schwellenwert (S1, S2) in der Weise von der Zeitlücke (t) abhängig ist, daß der Zeitpunkt (T1, T2), zu dem der Warnhinweis ausgegeben wird, mit zunehmender Zeitlücke (t) zu früheren Zeiten verschoben wird.

3. Fahrerassistenzsystem nach Anspruch 1 oder 2, **dadurch gekennzeichnet, daß** der Gefahrenparameter eine Funktion der vorausberechneten Zeit (ttc) bis zur Kollision ist.

4. Fahrerassistenzsystem nach einem der vorstehenden Ansprüche, **dadurch gekennzeichnet, daß** der Gefahrenparameter eine Funktion der zur Vermeidung der Kollision notwendigen Beschleunigung (ac) ist.

5. Fahrerassistenzsystem nach einem der vorstehenden Ansprüche, **dadurch gekennzeichnet, daß** die Kollisionswarnfunktion (PSS) sowohl auf bewegliche als auch auf stehende Objekte (24) reagiert, die vom Ortungssensor (10) geortet werden.

6. Fahrerassistenzsystem nach Anspruch 5, **dadurch gekennzeichnet, daß** für stehende und bewegliche Objekte unterschiedliche Schwellenwerte vorgesehen sind, und daß mindestens der für stehende Objekte vorgesehene Schwellenwert (S1, S2) in Abhängigkeit von der Zeitlücke (t) variabel ist.

## Claims

1. Driver assistance system for motor vehicles (22), have a locating sensor (10) and a collision-warning function (PSS) for outputting a warning message if a hazard parameter (ttc, ac) which is determined on the basis of the data of the locating sensor (10) exceeds a threshold value (S1, S2), **characterized in that** the driver assistance system also has a distance control function (ACC) which is designed to control the distance from a vehicle travelling ahead by intervening in the drive system, and to adjust the brake system of the driver's own vehicle to a time interval (t) which can be freely selected within certain limits by the driver, and **in that** the threshold value (S1, S2) is variable as a function of this time interval (t).

2. Driver assistance system according to Claim 1, **characterized in that** the threshold value (S1, S2) is dependent on the time interval (t) in such a way that the time (T1, T2) at which the warning message is output is moved forward to earlier times as the time interval (t) increases.

3. Driver assistance system according to Claim 1 or 2, **characterized in that** the hazard parameter is a function of the time (ttc), calculated in advance, up to the collision.

4. Driver assistance system according to one of the preceding claims, **characterized in that** the hazard parameter is a function of the acceleration (ac) necessary to avoid the collision.

5. Driver assistance system according to one of the preceding claims, **characterized in that** the collision-warning function (PSS) reacts both to moving and stationary objects (24) whose location is detected by the locating sensor (10).

6. Driver assistance system according to Claim 5, **characterized in that** different threshold values are provided for stationary and moving objects, and that at least the threshold value (S1, S2) which is provided for stationary objects is variable as a function of the time interval (t).

## Revendications

1. Système d'assistance au conducteur pour véhicules automobiles (22), comprenant un détecteur de localisation (10) et une fonction d'alerte de collision (PSS) pour délivrer une notification d'alerte lorsqu'un paramètre de conduite (ttc, ac) déterminé au moyen des données du détecteur de localisation (10) dépasse une valeur de seuil (S1, S2), **caractérisé en ce que** le système d'assistance au conducteur présente en plus une fonction de régulation de la distance (ACC) qui est conçue pour réguler la distance par rapport à un véhicule qui précède, en intervenant dans le système propulseur et dans le système de freinage du véhicule propre, à un intervalle de temps (t) pouvant être sélectionné librement par le conducteur à l'intérieur de certaines limites et **en ce que** la valeur de seuil (S1, S2) est variable en fonction de cet intervalle de temps (t).

2. Système d'assistance au conducteur selon la revendication 1, **caractérisé en ce que** la valeur de seuil (S1, S2) est dépendante de l'intervalle de temps (t) **en ce que** l'instant (T1, T2) auquel est délivré la notification d'alerte est décalé à des moments plus tôt à mesure que l'intervalle de temps (t) augmente.

3. Système d'assistance au conducteur selon la revendication 1 ou 2, **caractérisé en ce que** le paramètre de conduite est une fonction du temps calculé à l'avance (ttc) jusqu'à la collision.

4. Système d'assistance au conducteur selon l'une des revendications précédentes, **caractérisé en ce que** le paramètre de conduite est une fonction de l'accélération (ac) nécessaire pour éviter la collision.

5. Système d'assistance au conducteur selon l'une des revendications précédentes, **caractérisé en ce que** la fonction d'alerte de collision (PSS) réagit aux objets (24) à la fois mobiles et fixes qui sont localisés par le détecteur de localisation (10).

6. Système d'assistance au conducteur selon la revendication 5, **caractérisé en ce que** des valeurs de seuil différentes sont prévues pour les objets fixes et mobiles et **en ce qu'**au moins la valeur de seuil (S1, S2) prévue pour les objets fixes est variable en fonction de l'intervalle de temps (t).
